# EUROPEAN PATENT SPECIFICATION

(11) **EP 1 337 153 B1**
(45) Date of publication and mention of the grant of the patent: **21.02.2007**
(21) Application number: 01983017.3
(22) Date of filing: 09.11.2001
(51) Int. Cl.: A21D 10/04

(54) **REFRIGERABLE EXTENDED SHELF-LIFE LIQUID BATTER AND METHOD FOR ITS PRODUCTION**
KÜHLBARER FLÜSSIGTEIG MIT LÄNGERER HALTBARKEIT UND VERFAHREN ZU SEINER HERSTELLUNG
PATE LIQUIDE REFRIGERABLE ET A DUREE DE CONSERVATION PROLONGEE, ET SON PROCEDE DE PRODUCTION

(30) Priority: 10.11.2000 SE 0004108
(43) Date of publication of application: 27.08.2003
(60) Divisional application: 05000581.8
(73) Proprietor: Oatly AB, 261 51 Landskrona (SE)
(72) Inventor: ÖSTE TRIANTAFYLLOU, Angeliki, S-224 73 Lund (SE); ANDERSSON, Carina, SE-214 39 Malmö (SE); ÖSTE, Rickard, S-226 49 Lund (SE); EHLDE, Sofia, S-227 30 Lund (SE)
(74) Representative: Best, Michael
(86) International application number: PCT/SE2001/002479
(87) International publication number: WO 2002/037970

(56) References cited:
- WO-A2-99/04640
- US-A- 3 753 734
- US-A- 4 353 932
- US-A- 4 375 484

## Description

### FIELD OF THE INVENTION

The present invention relates to a ready-to-use refrigerable liquid batter for preparing pancakes, waffles, brownies, muffins, cakes and the like, the batter having a shelf life adequate for commercial distribution and storage, and to a method for its production. "Refrigerable liquid batter" refers to a batter which is sufficiently liquid (pourable) at a temperature below 8°C to permit its use at that temperature for making pancakes etc..

### BACKGROUND OF THE INVENTION

Pancakes, waffles, brownies, muffins, cakes and the like, are appreciated for composing main dishes and desserts. Typically pancakes etc. are made of egg, milk, fat and flour. However the variation of the ingredients is huge. The baked products have a high nutrient content, because they comprise substantial amounts of protein (e.g. milk and egg protein), fat and carbohydrate (e.g. starch), and they have a widely appealing taste. Cheese may be included in addition to or instead of milk and butter. Corn flour or cornstarch may substitute wheat flour and other starchy ingredients may be included such as oats, potato etc. The batter composition and flavour may thus vary to suit different purposes (e.g. main dish, dessert) and to meet the preference of different groups of people (e.g. kosher, ethnic, vegetarian).

By mixing of the fresh ingredients a pancake or waffle batter is produced. Alternatively a dry ingredient mix may be used to which a given amount of water is added. While a tasty product can be prepared from fresh ingredients by a person possessing the required skill and willing to spend the considerable time necessary, the use of a commercial dry ingredient mix shortens the time needed for preparation and requires little skill the result a product that is lacking some of the appeal and tastiness of the freshly prepared product. The obvious solution would be to provide a liquid batter which can be refrigerated, that is, kept at a temperature of from 0°C to 8°C. To be commercially acceptable such refrigerated shelf-life batter would need to have a shelf life of a week or more, preferably of at least two weeks.

The reason for the inadequate shelf life of refrigerable batters known in the art is the poor microbiological status after storing the liquid mixture refrigerated for a couple of days. U.S. patent no. 4,353,932 discloses refrigerable pourable and stable pancake batters in which the water activity of the batter is below 0.95 to discourage the growth of microbiological organisms. The prior art batter has a relatively low total sugar content, contains obligatory effective amounts of a leavening agent, and has substantially neutral pH. While the batter of the '932 patent is said to be microbiologically stable over extended periods of time when kept in a refrigerator, no data indicating the level of stability are given.

A spoonable batter having a low water activity of 0.81 to 0.92 is disclosed in WO 99/04640 to have a refrigerated shelf life of at least 75 days. The water activity is controlled by the sugar component. The batter also comprises an obligatory shortening agent. The prior art batter has a viscosity between that of a traditional pourable batter and a dough. Thus it is not freely pourable.

US-A-4 154 863 teaches a microbiologically stable batter, comprising flour, which comprises starch, from 15 to 40% water, sugar in a ratio to water of about from 1-1.5:1, from 2 to 25% fat, and minor but effective amounts of leavening agent, which comprises an acid, egg products, salt, emulsifier, stabilizer and flavouring. Sorbic, benzoic, propionic acid can be employed as an anti-mycotic agent. Starches useful include the new and chemically modified starches from potato, arrow root, corn, rice, wheat, waxy maize, sorghum and waxy sorghum.

### OBJECTS OF THE INVENTION

It is an object of the invention to provide a refrigerable liquid batter of the aforementioned kind having a shelf life that is substantially extended in comparison with a freshly prepared state-of-the-art liquid batter.

It is another object of the invention to provide a process of manufacture for such batter.

Further objects of the invention will be evident from the following description of the invention and preferred embodiments thereof, as well as from the appended claims

### SUMMARY OF THE INVENTION

According to the present invention is disclosed a ready-to-use refrigerable liquid batter. Despite its high water content (A_{w} > 0.95) the batter is microbiologically stable. The invention teaches the pasteurisation of a liquid batter for a time period sufficient to substantially lower the bacterial count and at a temperature below the gelatinisation temperature of the starch component of the batter. This treatment renders the product safe to store and use for several weeks, preferably for 12 weeks and more. In particular, according to the invention, thus is provided a ready-to-use refrigerable liquid batter having a water content (A_{w}) of 0.95 or higher and comprising a starch component of a kind that allowed the batter to be pasteurised at a temperature below the gelatinisation temperature of the starch component for a time period sufficient to make the batter display a total bacterial count of 1000 cfu/ml or less after storage for a period of 12 weeks at a temperature of from 0°C to 8°C.

The obstacle to heat treatment (pasteurisation) is the gelatinisation of the starch used to prepare traditional batters. Ideally, gelatinisation should not occur or, at least, should not occur to an extent substantially affecting the pourability of the batter, until the batter is fried. When starch thickens prior to refrigeration the chilled batter is not pourable and its cooking properties are damaged. Wheat flour starch undergoes gelatinisation already at temperatures around 50°C. On the other hand pasteurisation of a batter at such a temperature does not yield an acceptable, that is, microbiologically safe, product.

Gelatinisation upon heating an aqueous starch suspension is dependent, i.a., on water activity, temperature and heating time. Water accessibility is prerequisite for the starch granules to undergo a transition from the micro-crystalline to the amorphous state with a concomitant increase in viscosity of the suspension. Gelatinisation occurs within a range of temperatures and can be monitored by a number of techniques. In the case of an excess of water being used, such as in the present invention, the temperature range of starch gelatinisation is characteristic for the origin of the starch and also depends on its purity. Thus the gelatinisation temperature (T_{g}) depends on whether the starch originates from e.g. potato, rice or wheat. A heterogeneous material undergoes gelatinisation within a broader temperature range than a pure material. Heating at high water content most efficiently decreases bacterial counts.

In this invention a starchy material of a high gelatinisation temperature is included in the batter, forming a gel only during cooking, thereby allowing pasteurisation of the batter. The starch material of the invention is rice starch, rice flour, modified wheat or potato starch, annealed starch of various origin, waxy tapioca, amylomaize, waxy maize, arrowroot. Thus, according to the present invention is provided a convenience refrigerated old-fashion batter made of milk, egg and vegetable or milk fat wherein the traditional wheat flour has been substituted by a starch material having a high gelatinisation temperature (T_{g}).

Furthermore, according to the present invention, is provided a refrigerated non-dairy batter comprising a milk alternative that can be used in the place of dairy milk, egg and vegetable fat in combination with the high T_{g} starch. The milk alternative may be a milky suspension made from a cereal, such as oats or rice (as the product of the US patent 5, 686, 123 Lindahl et al.), or it may be soy drink, almond drink, etc..

According to the present invention is also provided a refrigerable liquid gluten-free batter comprising either dairy milk or an enzymatically hydrolysed starchy material free from gluten, such as oats, maize etc., egg, fat and the high T_{g} starch.

In particular, according to a first preferred aspect of the invention is provided a ready-to-use refrigerable liquid batter for preparing pancakes, waffles, brownies, muffins, cakes and the like, comprising a starch component and an organic acid or a mixture of organic acids, the batter having been microbiologically stabilised by heating to a temperature below the gelatinisation temperature of the starch component for a time period sufficient to substantially reduce the bacterial count of the batter so as to make the batter storable for at least three weeks at a temperature of 8°C or lower, according to the appended claims.

It is also preferred that the batter of the invention has been stabilised microbiologically at a temperature of 67°C.

A stabilisation period of from 2 to 10 minutes is preferred for the batter of the invention, in particular a stabilisation period of 8 minutes.

The viscosity of the batter of the invention measured at 4°C and 0.3 rpm is preferably from 5 Pas (5,000 cP) to 60 Pas (60,000 cP), preferably of from 8 Pas (8,000 cP) to 30 Pas (30,000 cP), in particular from 8 Pas (8,000 cP) to 15 Pas (15,000 cP), most preferred about 10 Pas (10,000 cP).

The total bacterial count of the batter of the invention is preferably less than 1,000 cfu/ml upon storing at a temperature of 8°C or lower for 12 weeks, in particular 500 cfu/ml or less.

According to a second preferred aspect of the invention the batter comprises the organic acid or mixture of organic acids in an amount of from 0.05% by weight to 0.30% by weight, preferably of 0.20% by weight.

According to a third preferred aspect of the invention, the organic acid or mixture of organic acids of the batter is selected from malic acid, sorbic acid including potassium sorbate, lactic acid, acetic acid, citric acid, tartaric acid, benzoic acid; particularly preferred is sorbic acid and malic acid; most preferred is a mixture of sorbic acid and malic acid.

According to a fourth preferred aspect of the invention the pH of the batter is adjusted to from 5.0 to 6.5 by said acid or mixture of acids, in particular to 5.9.

The starch component of the batter is selected from rice starch, rice flour, modified wheat starch, modified potato starch, annealed starch of various origin, waxy tapioca, amylomaize, waxy maize, arrowroot.

According to fifth preferred aspect of the invention the batter is prepared from one member of the group consisting of oat base, UHT dairy milk, soy base, almond base, rice drink, dairy milk pasteurised at 72°C.

According to a sixth preferred aspect of the invention is disclosed a pancake, waffle, brownie, muffin, cake and other fluffy baked product having a baked height to raw height of greater than 1, prepared from the batter of the invention by optionally adding a leavening agent to the batter.

According to a seventh preferred aspect of the invention is disclosed a method of producing a ready-to-use refrigerable liquid batter for preparing pancakes, waffles, brownies, muffins, cakes and the like, comprising the following steps:
(a) providing, in a battering vessel, conventional batter ingredients comprising:
   (1) cow milk or a cow milk substitute in an amount of from 40% by weight to 70% by weight, preferably 62% by weight, having a total solids content of 10%,
   (2) optionally, homogenised whole eggs in an amount of from 10% by weight to 30% by weight, preferably 20% by weight,
   (3) a starch component having a gelatinisation temperature of more than 72°C in an amount of 10-30% by weight, preferably of 19% by weight,
   (4) a food grade organic acid or a mixture of such acids in an amount of from 0.05% by weight to 0.30% by weight sufficient to adjust the pH of the batter to from 5.5 to 6.5, preferably to 5.9;
   (5) optionally potassium sorbate in an amount of 0% by weight to 0.25% by weight, preferably 0.15% by weight;
(b) battering the mixture of components (1)-(5) in the vessel for a time period sufficient to form a homogeneous liquid batter;
(c) heating the batter to a temperature of from 60°C to 72°C for a time sufficient to substantially reduce the bacterial count of the batter;
(d) cooling the batter to a temperature of 8°C or lower but not low enough to make the water in the batter freeze;
(e) packaging aseptically portions of the batter for distribution and storage at said temperature.

Conventional batter ingredients include but are not limited to: fat, such as corn oil, safflower oil, soybeen oil, butter, margarine, lard; egg substitutes, such as egg solids; nonfat dry milk; fruit bits, such as raisins, hazelnuts; sweeteners, such as sucrose, glucose, dextrose, corn syrup, fructose dextrose syrup, lactose; leavening agents; emulsifiers, such as mono- and diglycerides of fatty acids, higher fatty acid esters of sugars and sugar alcohols; flavour, such as vanilla; sea salt.

It is preferred to use, in the process of the invention, as cow milk a dairy milk treated with a Ultra High Temperature (UHT) method or a conventionally pasteurised dairy milk.

It is also preferred to use, in the process of the invention, as cow milk substitute one of: oat base, rice milk, soy base, almond base.

It is furthermore preferred to use, in the process of the invention, a starch component selected from rice starch, rice flour, modified wheat starch, modified potato starch, annealed starch of various origin, waxy tapioca, amylomaize, waxy maize, arrowroot.

In addition it is preferred to use, in the process of the invention, an acid or mixture of acids selected from malic acid, lactic acid, acetic acid, citric acid, tartaric acid, benzoic acid, sorbic acid.

### DESCRIPTION OF PREFERRED EMBODIMENTS

General description of the batter of the invention set out in detail in the following EXAMPLES. The liquid refrigerable batter has a water activity A_{w} of around 0.98. It comprises essentially milk (or a milk substitute), eggs, a starchy material (starch or flour) with a high gelatinisation temperature (T_{g}) and a preservative such as an organic acid, preferably malic acid, and/or potassium sorbate. The batter is pasteurised at 60-72°C for a period of 2-10 min, preferably at 67°C for 8 minutes. Then batter is cooled rapidly to a temperature of 8°C or lower and packed aseptically. The viscosity of the batter at 4°C and 0.3 rpm is to Pas (10,000 cP), similar to the viscosity of a conventional batter. The batter may be used for preparing pancakes, waffles or the like. The taste and consistency of these products resembles that of their traditional counterparts. Pasteurisation lowers microbial counts to a level rendering the product safe to consume for at least 10 weeks when kept at a temperature of 8°C or lower. Thus the product of the invention may be safely distributed and stored before being used to prepare pancakes and waffles. Current Swedish maximum acceptable microbial contamination values for food intended for human consumption are as follows:
- Total number of microorganisms 10⁷ cfu;
- Bacillus cereus 10⁴ cfu;
- Yeast 10⁴ cfu;
- Moulds 10³ cfu.

### EXAMPLE 1. Pancake batter prepared from UHT dairy milk.

### Constituents:

1) Cow milk 40-70% by weight, preferably 62% by weight, having a fat content of around 1.5% and a total solids content of 10%. The milk had been treated with Ultra High Temperature (UHT) method at 142 °C for 4 sec;
2) Eggs 10-30% by weight, preferably 20% by weight, of homogenised whole eggs;
3) Rice starch in an amount of 10-30% by weight, preferably 19% by weight (Remy B7, from Remy Industries, Leuven, Belgium);
4) Salt (sodium chloride) in an amount of 0-0.7% by weight, preferably 0.5% by weight;
5) A food grade organic acid or a mixture of such acids in an amount of 0.05-0.30% by weight, such as malic, lactic, acetic, citric acid, to adjust the pH at 5.5 to 6.5; preferably malic acid 0.1% by weight of malic acid to obtain a pH 5.9;
6) Optionally, potassium sorbate in an amount of 0-0.25% by weight, preferably 0.15% by weight;
7) Flavours may optionally be added, such as vanilla, cumin, cheese favour, etc.

The ingredients are thoroughly mixed to form a batter. The batter is pasteurised at 60-72°C, preferably at 67°C, for 2-10 minutes, preferably 8 minutes. The product is cooled to a temperature of 8°C or lower but not to a temperature at which it begins to freeze, and stored at that temperature to prevent microbial growth.

### Microbiological status:

- *Prior* to *pasteurisation*
   Total count: 360 cfu/ml (colony forming units per ml) of batter;
   Bacillus cereus: <10 cfu/ml;
   Yeast and moulds: 20 cfu/ml.
- *Directly after pasteurisation for 8 minutes at 67°C*
   Total count: 150 cfu/ml with malic acid only or 80 cfu/ml with both malic acid and sorbate;
   Bacillus cereus <10 cfu/ml;
   Yeast and moulds: 1 cfu/ml.
- *After storing the pasteurised product at 8°C*
   a) With both malic acid and sorbate; 12 weeks' storage
      Total count: 130cfu/ml;
      Bacillus cereus 20 cfu/ml.
   b) With malic acid only; 6 weeks' storage
      Total count: 500cfu/ml;
      Bacillus cereus 400 cfu/ml.

EXAMPLE 2. **Pancake batter prepared from an oat base.** Oat drink UHT treated with total solids content of 10% by weight is used instead of the cow milk of Example 1; otherwise, the procedure of EXAMPLE 1 is followed. A commercial oat base product of the Lindahl et al. or oat-based milk alternatives like Adavena© M40 (Ceba AB, Sweden) may be employed. The fat content of the oat base is adjusted to a total fat content of 1.5% by the addition of a vegetable oil such as rape seed, sunflower, safflower, maize, olive oil; preferably rape seed oil is used. Calcium is added to the oat base as tricalcium phosphate in an amount of 0.1% by weight to increase the nutritional value of the batter. This batter may be used also by people who avoid milk due to lactose intolerance, people that are allergic to milk protein and people on a kosher diet.

### Microbiological status

- *Prior* to *pasteurisation*
   Total count: 350 cfu/ml of batter;
   Bacillus cereus <10 cfu/ml;
   Yeast and moulds 50 cfu/ml.
- *Directly after pasteurisation at 67°C for 8 minutes*
   Total count: 150 cfu/ ml with malic acid only or 80 cfu/ml with both acid and sorbate;
   Bacillus cereus <10 cfu/ml;
   Yeast and moulds 2 cfu/ml.
- *After storing the pasteurised product for* at *8°C*
   a) With both malic acid and sorbate; 12 weeks' storage
      Total count: 190cfu/ml;
      Bacillus cereus 20 cfu/ml.
   b) With malic acid only; 6 weeks' storage
      Total count: 500cfu/ml;
      Bacillus cereus 350 cfu/ml.

EXAMPLE 3. **Pancake batter prepared from a soy or almond base.** Soy drink or almond drink UHT substitutes the cow milk in EXAMPLE 1; otherwise, the procedure of EXAMPLE 1 is followed. If a soy base is used sugar may be added to obtain browning upon heating the batter. The absence of reducing sugars in soy drink will otherwise produce an only lightly coloured pancake whereas the lactose and maltose of dairy milk and oat drink, respectively, will promote the formation of coloured Maillard products. A liquid pancake batter storable for 10 weeks at a temperature of 8°C or lower is obtained.

EXAMPLE 4. **Pancake batter prepared from rice drink.** The dairy milk of EXAMPLE 1 is exchanged for rice drink, the preparation of the batter otherwise being unchanged. A liquid pancake batter storable for 10 weeks at a temperature of 8°C or lower is obtained.

Example 5. **Pancake batter prepared from pasteurised dairy milk.** The sterilised or high-temperature pasteurised cow milk of EXAMPLE 1 is substituted by dairy milk pasteurised at 72 °C for 15 sec thereby having a higher total microbial count than UHT milk; otherwise, the procedure of EXAMPLE 1 is followed. A liquid pancake batter storable for a shorter period of time than the batters of EXAMPLES 1-4 is obtained.

### Microbiological status:

*Prior to pasteurisation*
   Total count: 9,000 cfu/ml of batter;
   Bacillus cereus <10 cfu/ml;
   Yeast and moulds 20 cfu/ml.
*Directly after pasteurisation at 67°C for 8 minutes*
   Total count: 7,000 cfu/ ml with malic acid only or 80 cfu/ml with both acid and sorbate;
   Bacillus cereus 100 cfu/ml;
   Yeast and moulds 1 cfu/ml.

- *After storing the pasteurised product for at 8°C*
   a) with both malic acid and sorbate; 12 weeks' storage
      Total count: 130cfu/ml;
      Bacillus cereus 20 cfu/ml.
   b) With malic acid only; 6 weeks' storage
      Total count: 5,500cfu/ml;
      Bacillus cereus 20 cfu/ml.

## Claims

1. Ready-to-use refrigerable liquid batter for preparing pancakes, waffles, brownies, muffins, cakes and the like, having a water activity A_{w} greater than 0.95 and comprising a starch component and an organic acid or a mixture of organic acids, wherein the starch component is selected from rice starch, rice flour, modified wheat starch, modified potato starch, annealed starch of various origin, waxy tapioca, amylomaize, waxy maize and arrowroot, obtainable by microbiological stabilisation by heating to a temperature of from 60°C to 72°C which is below the gelatinisation temperature of the starch component for a time period sufficient to substantially reduce the bacterial count of the batter so as to make the batter storable for at least three weeks at a temperature of 8°C or lower.

2. The batter of claim 1, obtainable by microbiological stabilisation at a temperature of 67°C.

3. The batter of claim 1, obtainable by a stabilisation period of from 2 to 10 minutes.

4. The batter of claim 3, obtainable by a stabilisation period of 8 minutes.

5. The batter of claim 1, **characterised by** a viscosity at 4°C and 0.3 rpm of from 5 Pas (5,000 cP) to 60 Pas (60,000 cP), preferably of from 8 Pas (8,000 cP) to 30 Pas (30,000 cP), in particular from 8 Pas (8,000 cP) to 15 Pas (15,000 cP).

6. The batter of claim 5, **characterised by** a viscosity at 4°C and 0.3 rpm of 10 Pas (10,000 cP).

7. The batter of claim 1, **characterised by** a total bacterial count of less than 1,000 cfu/ml upon storing at a temperature of 8°C or lower for 12 weeks.

8. The batter of claim 7, **characterised by** a total bacterial count of 500 cfu/ml or less upon storing at a temperature of 8°C or lower for 12 weeks.

9. The batter of claim 1, wherein the organic acid or mixture of organic acids is present in an amount of from 0.05% by weight to 0.30% by weight.

10. The batter of claim 1, wherein the organic acid or mixture of organic acids is selected from malic acid, sorbic acid including potassium sorbate, lactic acid, acetic acid, citric acid, tartaric acid, benzoic acid.

11. The batter of claim 1, wherein the pH is adjusted to from 5.0 to 6.5 by said acid or mixture of acids.

12. The batter of claim 11, wherein the pH is 5.9.

13. The batter of claim 1, obtainable from an oat base.

14. The batter of claim 1, obtainable from UHT dairy milk.

15. The batter of claim 1, obtainable from a soy or almond base.

16. The batter of claim 1, obtainable from a rice drink.

17. The batter of claim 1, obtainable from dairy milk pasteurised at 72°C.

18. A pancake, waffle, brownie, muffin, cake and other fluffy baked product having a baked height to raw height of greater than about 1, obtainable from the batter of any of claims 1-17.

19. A process of producing a ready-to-use refrigerable liquid batter for preparing pancakes, waffles, brownies, muffins, cakes and the like, comprising the following steps:
(a) providing, in a battering vessel, conventional batter ingredients comprising
(1) cow milk or a cow milk substitute in an amount of from 40% by weight to 70% by weight, preferably 62% by weight, having a total solids content of 10%,
(2) optionally, homogenised whole eggs in an amount of from 10% by weight to 30% by weight, preferably 20% by weight,
(3) a starch component having a gelatinisation temperature of more than 72°C in an amount of 10-30% by weight, preferably of 19% by weight,
(4) a food grade organic acid or a mixture of such acids in an amount of from 0.05% by weight to 0.30% by weight sufficient to adjust the pH of the batter to from 5.5 to 6.5, preferably to 5.9;
(5) optionally potassium sorbate in an amount of 0% by weight to 0.25% by weight, preferably 0.15% by weight;
(b) battering the mixture of components (1) - (5) in the vessel for a time period sufficient to form a homogeneous liquid batter;
(c) heating the batter to a temperature of from 60°C to 72°C for a time sufficient to substantially reduce the bacterial count of the batter;
(d) cooling the batter to a temperature of 8°C or lower but not low enough to make the water in the batter freeze;
(e) packaging aseptically portions of the batter for distribution and storage at said temperature.

20. The process of claim 19, wherein the cow milk is a dairy milk treated with a Ultra High Temperature (UHT) method.

21. The process of claim 19, wherein the cow milk is a conventionally pasteurised dairy milk.

22. The process of claim 19, wherein the cow milk substitute is an oat base.

23. The process of claim 19, wherein the cow milk substitute is rice milk.

24. The process of claim 19, wherein the cow milk substitute is a soy or almond base.

25. The process of claim 19, wherein the starch component is selected from rice starch, rice flour, modified wheat starch, modified potato starch, annealed starch of various origin, waxy tapioca, amylomaize, waxy maize, arrowroot.

26. The process of claim 19, wherein the acid or mixture of acids is selected from malic acid, lactic acid, acetic acid, citric acid, tartaric acid, benzoic acid, sorbic acid.

## Patentansprüche

1. Gebrauchsfertiger kühlfähiger flüssiger Teig zur Herstellung von Pfannkuchen, Waffeln, Brownies, Muffins, Kuchen und dgl. mit einer Wasseraktivität A_{w} von mehr als 0,95 und mit einer Stärkekomponente und einer organischen Säure oder einer Mischung von organischen Säuren, wobei die Stärkekomponente ausgewählt ist aus Reisstärke, Reismehl, modifizierter Weizenstärke, modifizierter Kartoffelstärke, getemperter Stärke verschiedenen Ursprungs, wachshaltigem Tapioka, Amylomais, Wachsmais und Pfeilwurz, erhältlich durch mikrobiologische Stabilisierung durch Erhitzen auf eine Temperatur von 60 bis 72°C, was unterhalb der Gelatinisierungstemperatur der Stärkekomponente liegt, über einen Zeitraum, der ausreicht, um die Bakterienzahl des Teigs wesentlich zu reduzieren, um den Teig für mindestens 3 Wochen bei einer Temperatur von 8°C oder weniger lagerfähig zu machen.

2. Teig nach Anspruch 1, erhältlich durch mikrobiologische Stabilisierung bei einer Temperatur von 67°C.

3. Teig nach Anspruch 1, erhältlich durch einen Stabilisierungszeitraum von 2 bis 10 Minuten.

4. Teig nach Anspruch 3, erhältlich durch einen Stabilisierungszeitraum von 8 Minuten.

5. Teig nach Anspruch 1, **gekennzeichnet durch** eine Viskosität bei 4°C und 0,3 U/min von 5 Pa·s (5.000 cP) bis 60 Pa·s (60.000 cP), bevorzugt 8 Pa·s (8.000 cP) bis 30 Pa·s (30.000 cP), insbesondere 8 Pa·s (8.000 cP) bis 15 Pa·s (15.000 cP).

6. Teig nach Anspruch 5, **gekennzeichnet durch** eine Viskosität bei 4°C und 0,3 U/min von 10 Pa·s (10.000 cP).

7. Teig nach Anspruch 1, **gekennzeichnet durch** eine Gesamtbakterienzahl von weniger als 1.000 cfu/ml bei 12-wöchiger Lagerung bei einer Temperatur von 8°C oder weniger.

8. Teig nach Anspruch 7, **gekennzeichnet durch** eine Gesamtbakterienzahl von 500 cfu/ml oder weniger bei 12-wöchiger Lagerung bei einer Temperatur von 8°C oder weniger.

9. Teig nach Anspruch 1, wobei die organische Säure oder die Mischung von organischen Säuren in einer Menge von 0,05 Gew.-% bis 0,30 Gew.-% vorhanden sind.

10. Teig nach Anspruch 1, wobei die organische Säure oder die Mischung von organischen Säuren ausgewählt sind aus Äpfelsäure, Sorbinsäure, einschließlich Kaliumsorbat, Milchsäure, Essigsäure, Citronensäure, Weinsäure, Benzoesäure.

11. Teig nach Anspruch 1, wobei der pH-Wert auf 5,0 bis 6,5 mit der Säure oder der Mischung von Säuren eingestellt wird.

12. Teig nach Anspruch 11, wobei der pH-Wert 5,9 ist.

13. Teig nach Anspruch 1, erhältlich aus Hafermaterial.

14. Teig nach Anspruch 1, erhältlich aus ultrahocherhitzter Molkereimilch.

15. Teig nach Anspruch 1, erhältlich aus auf Soja oder Mandel basierendem Material.

16. Teig nach Anspruch 1, erhältlich aus einem Reisgetränk.

17. Teig nach Anspruch 1, erhältlich aus bei 72°C pasteurisierter Molkereimilch.

18. Pfannkuchen, Waffel, Brownie, Muffin, Kuchen oder anderes flockiges gebackenes Produkt mit einem Verhältnis von Höhe in gebackenem Zustand zu Höhe im rohen Zustand von mehr als etwa 1, erhältlich aus dem Teig nach einem der Ansprüche 1 bis 17.

19. Verfahren zur Herstellung eines gebrauchsfertigen kühlfähigen flüssigen Teigs zur Herstellung von Pfannkuchen, Waffeln, Brownies, Muffins, Kuchen und dgl., umfassend die folgenden Stufen:
(a) dass in einem Teigrührgefäß die üblichen Teiginhaltsstoffe bereitgestellt werden, umfassend
(1) Kuhmilch oder Kuhmilchersatz in einer Menge von 40 bis 70 Gew.-%, bevorzugt 62 Gew.-%, mit einem Gesamtfeststoffgehalt von 10%,
(2) gegebenenfalls homogenisierte Volleier in einer Menge von 10 Gew.-% bis 30 Gew.-%, bevorzugt 20 Gew.-%,
(3) eine Stärkekomponente mit einer Gelatinisierungstemperatur von mehr als 72°C in einer Menge von 10 bis 30 Gew.-%, bevorzugt 19 Gew.-%,
(4) eine organische Säure oder eine Mischung von solchen Säuren mit Lebensmittelqualität in einer Menge von 0,05 bis 0,30 Gew.-%, die ausreicht, um den pH-Wert des Teigs auf 5,5 bis 6,5, bevorzugt 5,9 einzustellen;
(5) gegebenenfalls Kaliumsorbat in einer Menge von 0 bis 0,25 Gew.-%, bevorzugt 0,15 Gew.-%;
(b) die Mischung der Komponenten (1) bis (5) in dem Gefäß über einen Zeitraum geschlagen wird, der ausreicht, um einen homogenen flüssigen Teig zu bilden;
(c) der Teig auf eine Temperatur von 60 bis 72°C über einen Zeitraum erhitzt wird, der ausreicht, um die Bakterienzahl des Teigs wesentlich zu reduzieren;
(d) der Teig auf eine Temperatur von 8°C oder weniger gekühlt wird, aber nicht so tief, dass das Wasser in dem Teig gefriert;
(e) Teile des Teigs zur Verteilung und Lagerung bei der Temperatur aseptisch verpackt werden.

20. Verfahren nach Anspruch 19, wobei die Kuhmilch eine Molkereimilch ist, die mit einem Ultrahochtemperatur-(UHT)-Verfahren behandelt wurde.

21. Verfahren nach Anspruch 19, wobei die Kuhmilch eine in üblicher Weise pasteurisierte Kuhmilch ist.

22. Verfahren nach Anspruch 19, wobei der Kuhmilchersatz auf Hafer basiert.

23. Verfahren nach Anspruch 19, wobei der Kuhmilchersatz Reismilch ist.

24. Verfahren nach Anspruch 19, wobei der Kuhmilchersatz auf Soja oder Mandel basiert.

25. Verfahren nach Anspruch 19, wobei die Stärkekomponente aus Reisstärke, Reismehl, modifizierter Weizenstärke, modifizierter Kartoffelstärke, getemperter Stärke verschiedenen Ursprungs, wachshaltigem Tapioka, Amylomais, Wachsmais, Pfeilwurz ausgewählt ist.

26. Verfahren nach Anspruch 19, wobei die Säure oder Mischung von Säuren ausgewählt ist aus Äpfelsäure, Milchsäure, Essigsäure, Citronensäure, Weinsäure, Benzoesäure, Sorbinsäure.

## Revendications

1. Pâte liquide réfrigérable prête à l'emploi pour préparer des crêpes, des gaufres, des brownies, des muffins, des cakes, et similaires, présentant une activité de l'eau Aw supérieure à 0,95 et comprenant un composant amidon et un acide organique ou un mélange d'acides organiques, dans laquelle le composant amidon est sélectionné parmi l'amidon de riz, la farine de riz, l'amidon de froment modifié, l'amidon de pomme de terre modifié, l'amidon recuit de diverses origines, le tapioca cireux, l'amylomaïs, le maïs cireux et l'arrow root, pouvant être obtenue par stabilisation microbiologique en chauffant à une température comprise entre 60°C et 72°C, ce qui est en dessous de la température de gélatinisation du composant amidon, pendant une durée suffisante pour réduire substantiellement la numération bactérienne de la pâte afin de rendre la pâte conservable pendant au moins trois semaines à une température égale ou inférieure à 8°C.

2. Pâte selon la revendication 1, pouvant être obtenue par stabilisation microbiologique à une température de 67°C.

3. Pâte selon la revendication 1, pouvant être obtenue par une durée de stabilisation de 2 à 10 minutes.

4. Pâte selon la revendication 3, pouvant être obtenue par une durée de stabilisation de 8 minutes.

5. Pâte selon la revendication 1, **caractérisée par** une viscosité à 4°C et 0,3 rpm comprise entre 5 Pas (5 000 cP) et 60 Pas (60 000 cP), de préférence comprise entre 8 Pas (8 000 cP) et 30 Pas (30 000 cP), en particulier comprise entre 8 Pas (8 000 cP) et 15 Pas (15 000 cP).

6. Pâte selon la revendication 5, **caractérisée par** une viscosité à 4°C et 0,3 rpm de 10 Pas (10 000 cP).

7. Pâte selon la revendication 1, **caractérisée par** une numération bactérienne totale de moins de 1 000 cfu/ml lors du stockage à une température égale ou inférieure à 8°C pendant 12 semaines.

8. Pâte selon la revendication 7, **caractérisée par** une numération bactérienne totale de 500 cfu/ml ou moins lors du stockage à une température égale ou inférieure à 8°C pendant 12 semaines.

9. Pâte selon la revendication 1, dans laquelle l'acide organique ou le mélange d'acides organiques est présent en une proportion comprise entre 0,05 % en poids et 0,30 % en poids.

10. Pâte selon la revendication 1, dans laquelle l'acide organique ou le mélange d'acides organiques est sélectionné parmi l'acide malique, l'acide sorbique, y compris le sorbate de potassium, l'acide lactique, l'acide acétique, l'acide citrique, l'acide tartrique et l'acide benzoïque.

11. Pâte selon la revendication 1, dans laquelle le pH est ajusté à une valeur comprise entre 5,0 et 6,5 par ledit acide ou le mélange d'acides.

12. Pâte selon la revendication 11, dans laquelle le pH est de 5,9.

13. Pâte selon la revendication 1, pouvant être obtenue à partir d'une base avoine.

14. Pâte selon la revendication 1, pouvant être obtenue à partir de lait UHT.

15. Pâte selon la revendication 1, pouvant être obtenue à partir d'une base soja ou amande.

16. Pâte selon la revendication 1, pouvant être obtenue à partir d'une boisson de riz.

17. Pâte selon la revendication 1, pouvant être obtenue à partir de lait de ferme pasteurisé à 72°C.

18. Crêpe, gaufre, brownie, muffin, cake et autre produit cuit aéré ayant un rapport hauteur cuit à hauteur cru supérieur à environ 1, pouvant être obtenu à partir de la pâte selon l'une quelconque des revendications 1 à 17.

19. Procédé de production d'une pâte liquide réfrigérable prête à l'emploi pour préparer des crêpes, des gaufres, des brownies, des muffins, des cakes, et similaires, comprenant les étapes suivantes :
(a) disposer, dans une cuve de battage, les ingrédients d'une pâte classique, comprenant
(1) du lait de vache ou un substitut de lait de vache en une proportion comprise entre 40 % en poids et 70 % en poids, de préférence 62 % en poids, ayant une teneur en matière sèche de 10 %,
(2) facultativement, des oeufs entiers homogénéisés en une proportion comprise entre 10 % en poids et 30 % en poids, de préférence 20 % en poids,
(3) un composé amidon ayant une température de gélatinisation de plus de 72°C en une proportion de 10 à 30 % en poids, de préférence de 19 % en poids,
(4) un acide organique de qualité alimentaire ou un mélange d'acides de ce type en une proportion comprise entre 0,05 % en poids et 0,30 % en poids suffisante pour ajuster le pH de la pâte à une valeur comprise entre 5,5 et 6,5, de préférence à 5,9 ;
(5) facultativement du sorbate de potassium en une proportion comprise entre 0 % en poids et 0,25 % en poids, de préférence 0,15 % en poids ;
(b) battre le mélange de composants (1)-(5) dans la cuve pendant une durée suffisante pour former une pâte liquide homogène ;
(c) chauffer la pâte à une température comprise entre 60°C et 72°C pendant une durée suffisante pour réduire substantiellement la numération bactérienne de la pâte ;
(d) refroidir la pâte à une température de 8°C ou inférieure mais insuffisamment basse pour faire geler l'eau dans la pâte ;
(e) conditionner de manière aseptique des portions de la pâte pour la distribution et le stockage à ladite température.

20. Procédé selon la revendication 19, dans lequel le lait de vache est un lait de ferme traité avec un procédé ultra-haute température (UHT).

21. Procédé selon la revendication 19, dans lequel le lait de vache est un lait de ferme pasteurisé de manière conventionnelle.

22. Procédé selon la revendication 19, dans lequel substitut de lait de vache est une base avoine.

23. Procédé selon la revendication 19, dans lequel le substitut de lait de vache est du lait de riz.

24. Procédé selon la revendication 19, dans lequel le substitut de lait de vache est une base soja ou amande.

25. Procédé selon la revendication 19, dans lequel le composant amidon est sélectionné parmi l'amidon de riz, la farine de riz, l'amidon de froment modifié, l'amidon de pomme de terre modifié, l'amidon recuit d'origines diverses, le tapioca cireux, l'amylomaïs, le maïs cireux, l'arrow root.

26. Procédé selon la revendication 19, dans lequel l'acide ou le mélange d'acides est sélectionné parmi l'acide malique, l'acide lactique, l'acide acétique, l'acide citrique, l'acide tartrique, l'acide benzoïque, l'acide sorbique.
